# EUROPEAN PATENT SPECIFICATION

(11) **EP 2 622 716 B1**
(45) Date of publication and mention of the grant of the patent: **01.12.2021**
(21) Application number: 11831282.6
(22) Date of filing: 27.09.2011
(51) Int. Cl.: H02K 1/27, H02K 1/32, H02K 1/24

(54) **MAGNETIC ROTOR HAVING INSET BRIDGES TO PROMOTE COOLING**
MAGNETISCHER ROTOR MIT EINSATZBRÜCKEN ZUR FÖRDERUNG EINER KÜHLUNG
ROTOR MAGNÉTIQUE À PONTS INSÉRÉS POUR FAVORISER LE REFROIDISSEMENT

(30) Priority: 27.09.2010 US 386811 P; 23.08.2011 US 201113215296
(43) Date of publication of application: 07.08.2013
(73) Proprietor: Zapi S.p.A., 42028 Poviglio (RE) (IT)
(72) Inventor: BROWN, Gerald, W., Radford, VA 24143 (US); FILIP, Ethan, Christiansburg, VA 24073 (US); FUNK, Stephen J., Riner, VA 24149 (US)
(74) Representative: Grünecker Patent- und Rechtsanwälte PartG mbB
(86) International application number: PCT/US2011/053421
(87) International publication number: WO 2012/047633

(56) References cited:
- EP-A1- 1 953 896
- JP-A- S61 254 036
- US-A- 3 364 672
- US-A- 5 491 371
- US-A1- 2005 140 236
- US-A1- 2006 119 203
- US-A1- 2007 103 024
- US-A1- 2008 224 558
- US-A1- 2009 224 624
- US-B1- 6 225 724

## Description

### BACKGROUND OF THE INVENTION

### Field of the Invention

The present invention relates to an interior permanent magnet synchronous motor having a rotor configuration permitting an increased flow of air or other fluid between the rotor and a stator of the motor for improved heat transfer.

### Description of Related Art

U.S. Patent 5,051 ,634 to Overton discloses an electric motor including a steel shaft surrounded by an iron sleeve on which four permanent magnets are mounted. A banding surrounds the rotor structure to hold the magnets in place. To effect a transfer of heat from windings of the motor to the motor housing, a heat spike is added into each stator slot of the motor.

U.S. Patent Application Publication 2008/0030108 to Trago et al. discloses a stepper motor having a rotor shaft with front and rear rotor segments disposed thereon. An aluminum housing and aluminum endbells conduct heat generated in the motor into a faceplate for improved performance.

US 6 225 724 B1 discloses a motor rotor having embedded permanent magnets. A rotor includes a rotor core with laminated rotor core plates. A rotor core is made of electromagnetic steel, in which a number of slits and a number of magnetic paths are formed in a direction of a center of the rotor core. The magnets are embedded in the slits.

US 5 491 371 discloses a lamination for a stator or rotor of an electrical machine, wherein the lamination has a series of circularly spaced protrusions projecting away from the periphery and from the main extent of the lamination, whereby a stack of laminations, at least some of which incorporate the protrusions, define fluid coolant passages adjacent the protrusions.

JP S61 254036 A discloses a rotor provided with a magnetic pole fitted on a yoke on a rotary shaft. The pole is provided with a ventilation flue so that the pole surface on the rear side may be cooled more than the pole surfaces on the front side in the rotational direction of the pole. The ventilation flue is provided continuously in the peripheral direction on the surface of the pole, and is formed with a continuous cooled groove.

EP 1 953 896 A1 discloses a rotor for an electric rotating machine that improves cooling performance of the rotating machine.

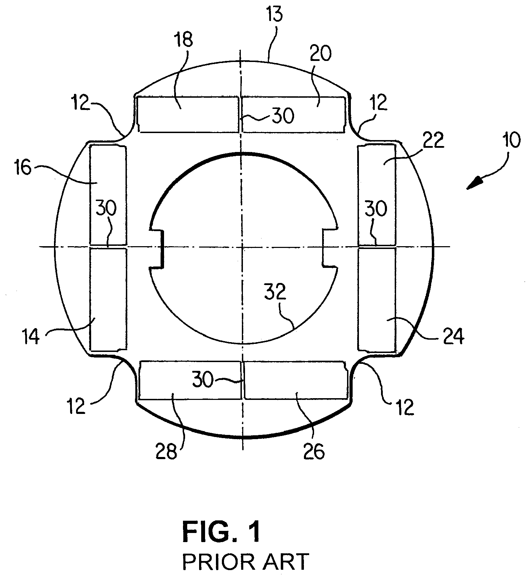

Figure 1 illustrates a known interior permanent magnet rotor lamination 10, in plan view, with indentations 12 on the rotor outer diameter 13. The rotor lamination illustrated in Figure 1 is a single layer interior permanent magnet rotor lamination. Each indentation 12 is located between adjacent pairs of magnet receiving voids or orifices 14 and 16, 18 and 20, 22 and 24, and 26 and 28, and each magnet receiving void or orifice of these pairs is separated from the other such void or orifice by a thin bridge 30 of rotor lamination material. In operation, permanent magnets (not shown) are affixed within the voids or orifices to cooperate with windings disposed around poles of a stator, within which the rotor lamination 10 is rotatable. A rotor shaft (not shown) is receivable within a shaft opening 32 to impart rotational motion to the rotor.

### SUMMARY OF THE INVENTION

The present invention provides a rotor arrangement according to claim 1. Specific embodiments are defined in the dependent claims.

### BRIEF DESCRIPTION OF THE DRAWINGS

Figure 1 is a plan view of a known interior permanent magnet rotor lamination.
Figure 2 is a plan view of an interior permanent magnet rotor lamination in accordance with one embodiment of the present invention.
Figure 3 is a plan view of part of an interior permanent magnet rotor lamination in accordance with another embodiment of the present invention.

### DETAILED DESCRIPTION OF THE INVENTION

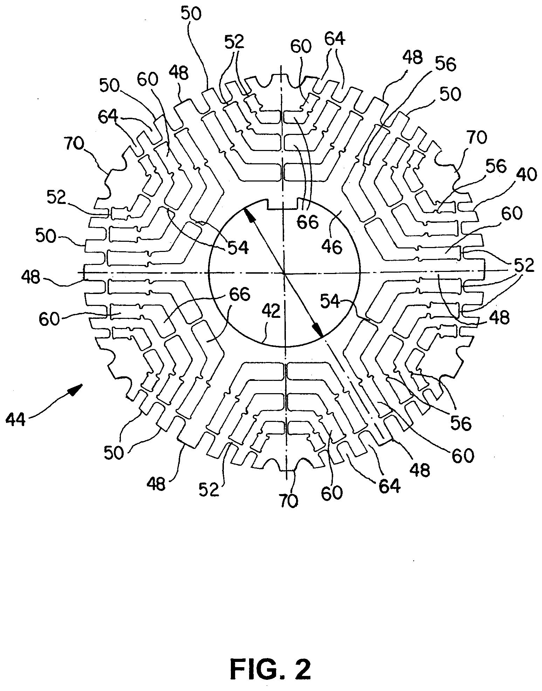

A lamina 40 used in production of a rotor according to the present invention is shown in plan view in Figure 2. It will be understood by those of ordinary skill in the art that the lamina 40 shown in Figure 2 is the endmost lamina of multiple (e.g., fifty) laminas joined together in a stack to produce a multilayer laminated rotor 44. The laminas may be stamped from sheets of steel or other suitable material. As with the known arrangement illustrated in Figure 1, a rotor shaft (not shown) is receivable within a shaft opening 42 of the rotor 44 to impart rotational motion to the rotor.

Each lamina 40 may have a unitary, one piece construction, as shown, with a solid central section 46, in which the shaft opening 42 is provided, and a multiplicity of spokes 48 extending radially outward from the solid central section 46. A plurality of nested ribs 50 are received between adjacent spokes 48. The ribs 50 and the spokes 48 are interconnected by way of outer, approximately circumferentially extending bridges 52 and inner, approximately radially extending bridges 54, so that each rotor lamina 40, as a whole, is an integral element. In Figure 2, six spokes 48, at sixty degree intervals, are shown, but other numbers of spokes could be used. Protrusions 56 are defined at appropriate locations on opposed edges of the spokes 48 and the ribs 50. These protrusions serve to properly position permanent magnet elements (not shown) receivable within magnet receptacles 60 defined between the protrusions 56 and the outer bridges 52.

The rotor 44 thus is formed as a multilayer IPM (interior permanent magnet) rotor, with outer bridges 52 that are inset from the outer diameter of the rotor 44. These bridges 52 of laminate material are not on the rotor outer diameter, as is traditional for multilayer IPM designs, but rather inset toward the inner diameter or solid central section 46 of the rotor 44. Insetting the bridges 52 in this way allows for recesses 64, which add significant cross- sectional area at the rotor outer diameter that is contiguous with the air or other fluid gap, within which cooling air or other fluid can flow. This area allows for a lower impedance path for fluid flow from a shaft mounted fan, and, therefore, provides improved cooling of the motor windings, which form the hottest part of the motor. Setting the outer bridges 52 in from the outer diameter of the rotor 44, in other words, provides an increased cross-sectional area in an air gap region, which increases the airflow from a fan (not shown) and provides increased heat transfer from the winding and the rotor to the airflow, thereby cooling the motor with greater effect. Air flow, of course, will also occur through passages 66 remaining between the magnet receptacles 60 and the radially extending bridges 54.

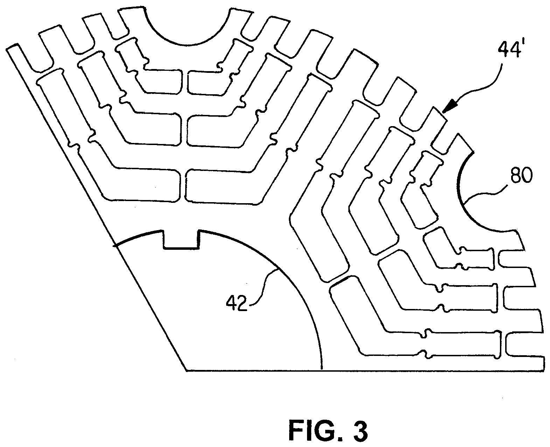

Each lamination of the rotor 44 illustrated in Figure 2 is shown with center pole tips 70 located within what otherwise would be unobstructed air channels at the rotor outer circumference. The center pole tips 70 are integrally formed with the rest of the lamination, and are intended to increase the average torque produced and, at the same time, minimize variations in torque, or torque "ripple." Figure 3 illustrates a portion of a similar multilayer laminated rotor 44', having outer air flow channels 80 unobstructed by center pole tips 70. A rotor constructed from laminations 44' might have a somewhat greater degree of torque ripple, a lower average torque, or both, but would have greater cooling characteristics as well.

The foregoing disclosure has been set forth merely to illustrate the invention and is not intended to be limiting. Modifications of the disclosed embodiments incorporating the substance of the invention may occur to persons skilled in the art, and the invention should be construed to include everything within the scope of the invention ultimately claimed.

## Claims

1. A rotor arrangement mountable on a shaft for rotation relative to a stator of a rotary arrangement having a plurality of laminations (40) joined together to form a multilayer laminated rotor (44) with a plurality of magnet receptacles (60), each of the laminations comprising:
a solid central section (46) surrounding an opening (42) within which the shaft is receivable,
spokes (48) extending substantially radially outwardly from the solid central section (46),
ribs (50) interposed between adjacent spokes (48),
bridges (52) interconnecting the spokes (48) and ribs (50),
wherein at least some of the bridges (52) are inset from an outer diameter of the lamination (40) toward the solid central section (46) to decrease fluid flow impedance and improve rotary motor cooling,
wherein the bridges (52) extend approximately circumferentially and further comprising additional radially extending bridges (54) that interconnect the solid central section (46) and a plurality of the ribs (50),
further comprising air flow passages (66) between the magnet receptacles (60) and the radially extending bridges (54).

2. The rotor arrangement of claim 1, wherein each lamination has an unobstructed channel for fluid on its outer circumference that is centrally located between the spokes.

3. The rotor arrangement of claim 1 or 2, wherein each lamination has a center pole tip on its outer circumference that is centrally located between the spokes.

4. The rotor arrangement of claim 1, wherein the ribs and the spokes include protrusions defined thereon to position magnet elements between the protrusions and the outer bridges.

5. The rotor arrangement of claim 1, wherein at least six of the spokes are provided.

6. The rotor arrangement of claim 1, wherein each of the bridges is inset from the outer lamination diameter.

## Patentansprüche

1. Rotor-Anordnung, die an einer Welle zur Drehung relativ zu einem Stator einer rotierenden Anordnung installiert werden kann, die eine Vielzahl von Blechen (40) aufweist, die miteinander verbunden sind und einen geschichteten Rotor (44) aus mehreren Schichten mit einer Vielzahl von Magnet-Aufnahmen (60) bilden, wobei jedes der Bleche umfasst:
einen massiven Mittelabschnitt 46), der eine Öffnung (42) umgibt, in der die Welle aufgenommen werden kann,
Speichen (48), die sich von dem massiven Mittelabschnitt (46) im Wesentlichen radial nach außen erstrecken,
Rippen (50), die zwischen benachbarten Speichen (48) angeordnet sind,
Brücken (52), die die Speichen (48) und Rippen (50) miteinander verbinden,
wobei wenigstens einige der Brücken (52) gegenüber einem Außendurchmesser des Blechs (40) in Richtung des massiven Mittelabschnitts (46) zurückgesetzt sind, um den Fluid-Strömungswiderstand zu verringern und Kühlung des rotierenden Motors zu verbessern,
sich die Brücken (52) annähernd in Umfangsrichtung erstrecken und des Weiteren zusätzliche, sich radial erstreckende Brücken (54) umfassen, die den massiven Mittel-Teilabschnitt (46) und eine Vielzahl der Rippen (50) miteinander verbinden,
und des Weiteren Luft-Strömungskanäle (66) zwischen den Magnet-Aufnahmen (60) und den sich radial erstreckenden Brücken (54) umfasst.

2. Rotor-Anordnung nach Anspruch 1, wobei jedes Blech an seinem Außenumfang einen freien Kanal für Fluid aufweist, der sich mittig zwischen den Speichen befindet.

3. Rotor-Anordnung nach Anspruch 1 oder 2, wobei jedes Blech an seinem Außenumfang eine mittlere Polspitze aufweist, die sich mittig zwischen den Speichen befindet.

4. Rotor-Anordnung nach Anspruch 1, wobei die Rippen und die Speichen daran ausgebildete Vorsprünge zum Positionieren von Magnetelementen zwischen den Vorsprüngen und den äußeren Brücken enthalten.

5. Rotor-Anordnung nach Anspruch 1, wobei wenigstens sechs der Speichen vorhanden sind.

6. Rotor-Anordnung nach Anspruch 1, wobei jede der Brücken gegenüber dem Außendurchmesser des Blechs zurückgesetzt ist.

## Revendications

1. Dispositif de rotor pouvant être monté sur un arbre pour une rotation par rapport à un stator d'un dispositif rotatif présentant une pluralité de tôles (40) jointes ensemble pour constituer un rotor feuilleté multicouche (44) avec une pluralité de réceptacles d'aimants (60), chacune des tôles comprenant :
une section centrale pleine (46) entourant une ouverture (42) au sein de laquelle l'arbre peut être accueilli,
des rayons (48) s'étendant substantiellement radialement vers l'extérieur à partir de la section centrale pleine (46),
des nervures (50) interposées entre des rayons adjacents (48),
des ponts (52) interconnectant les rayons (48) et les nervures (50),
dans lequel au moins certains des ponts (52) sont insérés depuis un diamètre extérieur de la tôle (40) vers la section centrale pleine (46) pour diminuer une impédance de flux fluidique et améliorer un refroidissement du moteur rotatif,
dans lequel les ponts (52) s'étendent approximativement circonférentiellement et comprenant en outre des ponts supplémentaires s'étendant radialement (54) qui interconnectent la section centrale pleine (46) et une pluralité des nervures (50),
comprenant en outre des passages de flux d'air (66) entre les réceptacles d'aimants (60) et les ponts s'étendant radialement (54).

2. Le dispositif de rotor de la revendication 1, dans lequel chaque tôle présente un canal non obstrué pour un fluide sur sa circonférence extérieure qui est placé de manière centrale entre les rayons.

3. Le dispositif de rotor de la revendication 1 ou 2, dans lequel chaque tôle présente une pointe de pôle central sur sa circonférence extérieure qui est placé de manière centrale entre les rayons.

4. Le dispositif de rotor de la revendication 1, dans lequel les nervures et les rayons incluent des protrusions définies sur ceux-ci pour positionner des éléments d'aimant entre les protrusions et les ponts extérieurs.

5. Le dispositif de rotor de la revendication 1, dans lequel au moins six des rayons sont disposés.

6. Le dispositif de rotor de la revendication 1, dans lequel chacun des ponts est inséré depuis le diamètre de tôle extérieur.
